# EUROPÄISCHE PATENTSCHRIFT

(11) **EP 1 665 968 B1**
(45) Veröffentlichungstag und Bekanntmachung des Hinweises auf die Patenterteilung: **09.05.2007**
(21) Anmeldenummer: 05024055.5
(22) Anmeldetag: 04.11.2005
(51) Int. Cl.: A47J 31/40

(54) **Brühkopf einer Espressomaschine**
Brewing head for an espresso machine
Tête d'infusion d'une machine espresso

(30) Priorität: 04.12.2004 DE 202004018776 U
(43) Veröffentlichungstag der Anmeldung: 07.06.2006
(73) Patentinhaber: Eugster/Frismag AG, 8590 Romanshorn (CH)
(72) Erfinder: Fischer, Daniel, 8590 Romanshorn (CH)
(74) Vertreter: Schubert, Siegmar

(56) Entgegenhaltungen:
- EP-A- 0 270 141
- EP-A- 0 298 547
- EP-A- 0 443 054
- US-A- 4 271 752
- US-A1- 2003 116 026

## Beschreibung

Die Erfindung betrifft einen Brühkopf einer Espressomaschine mit einer druckdicht verschließbaren Brühkammer nach dem Oberbegriff des Anspruchs 1.

Eine Espressomaschine mit einem Brühkopf, der diese Merkmale aufweist, umfaßt einen über der Brühkammer linear verschiebbaren Schlitten, der als Räumschieber ausgebildet ist und auch zur Brühwasserzufuhr dient (EP 0 443 054 B1). Der Schlitten hat ein Schließglied für eine mit einer Umfangswandung gerätefest ausgebildete Brühkammer. Der Schlitten mit dem Schließglied ist zwischen einer ersten Stellung zum Eindosieren von Kaffeemehl, einer zweiten Stellung zum Verschließen der Öffnung der Brühkammer und einer dritten Stellung zum nachfolgenden Abstreifen und Auswerfen des ausgelaugten Kaffesatzes bewegbar. Hierbei befindet sich das Schließglied in einer ersten Stellung auf einer Seite der Öffnung und in seiner dritten Stellung auf einer im wesentlichen gegenüberliegenden Seite der Öffnung der Brühkammer. Der Abstreifer ist derart an dem Schlitten angeordnet, daß er sich in der ersten Stellung an einer der Öffnung abgewandten Seite des Schließglieds, in der dritten Stellung außerhalb der Öffnung und während einer Bewegung aus der dritten über die zweite Stellung zum Abstreifen des Kaffeesatzes an der vorderen Seite des Schließgliedes befindet. Der Arbeitsablauf der Kaffeemaschine wird durch eine gesteuerte Antriebseinrichtung durchgeführt, die einen Motor mit einem Getriebe einschließlich einer Scheibe mit einer als geschlossene Schleife unsymmetrisch um die Drehachse umlaufenden Nut durchgeführt, über die eine Kolbenstange eines in der Brühkammer verschiebbaren Hubkolbens bewegt wird. Das Getriebe enthält ferner eine Schwinge, über die der Schlitten bewegt wird. ― Diese Espressomaschine hat die Nachteile, daß die während des Brühvorganges, der unter einem hohen Druck von ca. 12 bar stattfinden kann, notwendige Dichtung zwischen der Brühkammer und dem Schlitten durch Dichtmittel erfolgen muß, die im Bereich der Gleitebene des Schlittens angeordnet sind und deshalb hohem Verschleiß unterliegen. Die Bewegbarkeit des Schlittens in drei Positionen erfordert ein entsprechend großes Bauvolumen des Geräts.

Um die Abdichtungsprobleme im Bereich der Brühkammer in betriebssicherer Weise zu lösen und Espresso sehr guter Qualität herzustellen, ist es bereits bekannt, den zweiteiligen Brühkopf, der in einem gehäusefesten Unterteil einen zwangsgesteuerten Hubkolben enthält, mit einem beweglichen Oberteil auszustatten, in dem ein Brühkolben verschiebbar ist, der von oben in die Brühkammer eintauchen kann (EP 0 756 842 A1). Das Oberteil umfaßt einen Einfüllschacht für frisch gemahlenen Kaffee, Räumflügel, die Brühkolbeneinheit mit Kaffeeauslauf, Brühsieb, Brühkolbendichtung und Cremaventil. An dem Oberteil des Brühkopfes ist weiterhin ein Absenkhebel mit Lager und Rastvorrichtung angeordnet. Das Unterteil des Brühkopfes ist mit der ortsfesten Brühkammer mit dem Wassereinlaufstutzen, dem Hubkolben und dessen Antrieb über einen Pleuel ausgerüstet, der in Wirkverbindung mit einem ebenfalls im Unterteil gelagerten Steuerhebel steht, mit dem die Auf- und Abbewegung des Hubkolbens gesteuert wird. Das Oberteil ist mittels einer Drehachse, die auch den Steuerhebel betätigt, gegenüber dem Unterteil um 360° verdrehbar, wobei Funktionspositionen durch Rastungen fixiert sind. Zur Füllung des Brühkopfes mit Kaffeemehl wird der Einfüllschacht über der Brühkammer positioniert. Durch anschließende Drehung wird der Brühkolben über der Brühkammer positioniert und dann durch Absenken des Absenkhebels in die Brühkammer eingeführt. Dabei erfolgt die Abdichtung der Brühkammer durch eine Ringdichtung auf einem Brühkolbenunterteil. Während des anschließenden Brühvorgangs, zu dem Brühwasser durch den Wassereinlaufstutzen und Löcher des Hubkolbens in die Brühkammer gedrückt wird, ist der Brühkolben fixiert. Nach dem Brühvorgang wird der Brühkolben gelöst und durch Anheben des Absenkhebels aus der Brühkammer gehoben. Die Entsorgung des Kaffeesumpfes erfolgt durch Weiterdrehen des Brühkopfoberteils in dessen Ausgangsstellung, die der Füllstellung entspricht. ― Mit diesem Brühkopf werden die Nachteile der weiter oben erörterten Kaffeemaschine beseitigt, insbesondere wird eine sichere, verschleißarme Abdichtung der Brühkammer erreicht. Als nachteilig kann jedoch empfunden werden, daß der Brühkopf wenig kompakt ist und, insbesondere wegen des Absenkhebels und der mit ihm verbundenen Elemente über der Brühkammer, verhältnismäßig hoch ist.

Der vorliegenden Erfindung liegt daher die Aufgabe zugrunde, eine zuverlässige verschleißarme Abdichtung der Brühkammer mit einem kompakten, insbesondere flachen Brühkopf auch langfristig zu erreichen.

Diese Aufgabe wird durch die Ausbildung des Brühkopfes mit den in dem kennzeichnenden Teil des Anspruchs 1 angegebenen Merkmalen gelöst.

Die erfindungsgemäße Lösung ist gekennzeichnet durch eine die Umfangswandung der Brühkammer bildende bewegliche Brühkammerhülse, die senkrecht zu der Ebene der Gleitfläche eines Schlittens, der wesentlicher Bestandteil eines Oberteils des Brühkopfes ist, im wesentlichen in einem Unterteil des Brühkopfes verschiebbar ist, wobei er mit einem äußeren, bevorzugt oberen Abschnitt durch die Ebene der Gleitfläche hindurch zwangsgesteuert in eine Dichtungsposition fahren kann, um die Brühkammer für einen Brühvorgang vollständig zu bilden. Nach einem Brühvorgang wird der äußere Abschnitt der Brühkammerhülse zwangsgesteuert aus der Ebene der Gleitfläche zurückgefahren, um eine ungehinderte Bewegung des Schlittens zu ermöglichen. Somit ist der Dichtungsbereich aus der Ebene der Gleitfläche versetzt, und ein Dichtelement in dem Dichtungsbereich kann jedenfalls durch Verschieben des Schlittens entlang der Gleitfläche, nachdem die Brühkammerhülse aus der Dichtungsposition zurückgezogen ist, nicht abgenutzt werden. Deswegen kann die Abdichtung der Brühkammer optimiert werden. Die Betätigungselemente der Brühkammerhülse sind ebenso wie ein Hubkolbenantrieb und im wesentlichen ein Schlittenantrieb bevorzugt in dem Unterteil des Brühkopfes angeordnet und nicht auf dem Oberteil. Daher kann der Brühkopf kompakt, insbesondere flach ausgebildet werden.

Die Brühkammer wird somit zwischen dem Hubkolben, der Brühkammerhülse, welche die Umfangswandung, genauer einen inneren Abschnitt der Umfangswandung der Brühkammer bildet, und dem Schlitten, genauer einem im wesentlichen kolbenförmigen Abschnitt auf der Unterseite des Schlittens und im Abstand zu dessen Gleitfläche, realisiert.

Zur sicheren Abdichtung der Brühkammer ist die Dichtung gemäß Anspruch 2 als Ringdichtung ausgebildet und auf dem im wesentlichen kolbenförmigen Abschnitt auf der Unterseite des Schlittens aufgebracht. Der kolbenförmige Abschnitt ist fester Bestandteil des Schlittens und benötigt somit keine bewegliche Lagerung und keine Antriebsorgane zu einer Bewegung quer zu der Verschiebrichtung des Schlittens, um die Brühkammer zu öffnen oder zu schließen. Die Abdichtung der Brühkammer mit diesem kolbenförmigen Abschnitt wird gemäß Anspruch 3 dadurch bewirkt, daß der obere Abschnitt der Brühkammerhülse über die Ringdichtung auf den kolbenförmigen Abschnitt gefahren wird und die Ringdichtung in dieser Position einfaßt bzw. umschließt. Diese Anordnung ist unempfindlich gegenüber Toleranzen der Position der Brühkammerhülse in deren Hubrichtung zu dem kolbenförmigen Abschnitt des Schlittens bzw. der Ringdichtung in der Dichtungsposition.

Bevorzugt liegt gemäß Anspruch 10 die Ebene der Gleitfläche des Schlittens im wesentlichen horizontal, wogegen die Brühkammerhülse im wesentlichen vertikal heb- und absenkbar ist. Auf diese Orientierung bezieht sich u.a. die Definition des oberen Abschnitts der Brühkammerhülse, der allgemeiner ein äußerer Abschnitt der Brühkammerhülse ist, der die Öffnung der Brühkammer begrenzt. - Die Konfiguration der Ebene der Gleitfläche des Schlittens und der Brühkammerhülse, welche die Brühkammerwand bildet, gemäß Anspruch 10 ist besonders dienlich, wenn die Kaffeemühle gemäß Anspruch 22 Kaffeemehl direkt, also nur unter Nutzung der Schwerkraft, in die Brühkammer einmahlen soll und sich hierzu oberhalb der Brühkammer befindet.

Die Konfiguration der Ebene der Gleitfläche des Schlittens zu der Hubrichtung der Brühkammerhülse gemäß Anspruch 10 bedeutet bezogen auf Anspruch 1 konkretisiert, daß in der Arbeitsstellung des Schlittens die Brühkammerhülse zwangsgesteuert von unten durch die Ebene der Gleitfläche hindurch in die Dichtungsposition verfahren wird und nach dem Brühvorgang nach unten aus der Gleitfläche in die Ruheposition zurückgefahren wird.

Mehr im einzelnen ist gemäß Anspruch 4 der Hubkolben in der Brühkammerhülse in der Brühkammer parallel zu dieser verschiebbar und steht mit einem Hubkolbenantrieb in Verbindung. Der Hubkolben ist ein verschiebbarer Kolben in dem Brühkopf und hat somit die Funktion eines Brühkolbens. Zum Antrieb der Brühkammerhülse steht diese unter Federbelastung, sie ist also vorgespannt, und zwar in Richtung auf die Dichtungsposition. Die Bewegung in die Dichtungsposition wird einerseits durch den Hubkolben gesteuert, der an einem Mitnahmering der Brühkammerhülse anliegt, so daß sich die Brühkammerhülse über einen Teilhub des Hubkolbens nur zusammen mit diesem bewegen kann. Der Teilhub ist einseitig durch die untere Ruheposition des Hubkolbens und andererseits durch dessen Position definiert, in der er sich von dem Mitnahmering in Dichtungsposition der Brühkammerhülse löst, um weiter zum Verdichten von Kaffeemehl in der Brühkammer angehoben zu werden. Außerdem kann die Brühkammerhülse in ihrer unteren Ruheposition mittels einer Sperrnase arretiert werden, wenn nach einem Brühvorgang der ausgelaugte Kaffemehlkuchen mit einem Ausschieber seitlich ausgeschoben werden soll. Die Arretierung und das Lösen der Arretierung der Brühkammerhülse mit der Sperrnase erfolgt ebenfalls zwangsgesteuert, und zwar bevorzugt mit den Mitteln gemäß den Ansprüchen 7 und 8. Die oben erwähnte Federbelastung der Kammerhülse kann gemäß Anspruch 5 durch wenigstens eine Druckfeder erfolgen, die an der Brühkammerhülse mittelbar oder unmittelbar angreift. Hierzu sind insbesondere Federarme dem Brühzylinder fest zugeordnet.

Zum Antrieb des Hubkolbens steht dieser mit einem Spindelzylinder in Verbindung, der durch den oben erwähnten Mitnahmering hindurchreichen kann und der mit einem elektromotorischen Hubkolbenantrieb in Verbindung steht. Der Spindelzylinder kann mehrgängig ausgebildet sein. Er kann mit dem Hubkolben fest verbunden sein.

Bevorzugt ist jedoch in einem hohlen Spindelzylinder eine Hubkolbenstange gemäß Anspruch 21 verschiebbar gelagert, und in dem hohlen Spindelzylinder ist eine Druckfeder angeordnet, welche den Hubkolben über die Hubkolbenstange belastet. Diese Anordnung ist in Verbindung mit einem Cremaventil gemäß Anspruch 20 vorgesehen, welches in dem kolbenförmigen Abschnitt des Schlittens angeordnet ist. Durch die Federbelastung des Hubkolbens kann sich das Volumen der Brühkammer unter hohem Druck des einlaufenden Brühwassers vergrößern, wodurch das Kaffeemehl vor dem eigentlichen Brühvorgang unter Druck besser durchfeuchtet wird, was zu einer besseren Cremabildung führt. Erst wenn das Cremaventil bei einem vorgegebenen Überdruck öffnet, entspannt sich die Druckfeder in dem Spindelzylinder und drückt den Kaffeekuchen zusammen.

Wie oben erwähnt wird die Brühkammerhülse in ihrer Ruheposition mit der Sperrnase vor dem Abschieben des ausgelaugten Kaffeemehlkuchens arretiert. Zu der entsprechenden Zwangssteuerung der Brühkammerhülse steht ein Abgang des Getriebes, welches zu einem elektromotorischen Schlittenantrieb mit einem Antriebsmotor gehört, mit einer Sperrscheibe in Verbindung, die so ausgebildet ist, daß die Sperrnase über einen Teildrehbereich der Sperrscheibe an dieser angreift.

Die Sperrfunktion der Sperrnase wird dadurch sichergestellt, daß gemäß Anspruch 9 die Brühkammerhülse in einer ortsfesten Führungshülse linear verschiebbar geführt ist, so daß sich die Brühkammerhülse bei ihrer bestimmungsgemäßen Bewegung nicht in der Führungshülse verdrehen kann und somit die Sperrnase mitnimmt.

Zu den vorteilhaften Merkmalen des Brühkopfes gehört gemäß Anspruch 11, daß der Schlitten, der im wesentlichen das Oberteil des Brühkopfes bildet, zwischen lediglich zwei Endstellungen, nämlich einer Arbeitsstellung, in der unter anderem der Brühvorgang erfolgt, und einer Ausgangsstellung, in der das Füllen der Brühkammerhülse bzw. das Ausräumen des ausgelaugten Kaffeemehlkuchens nach dem Brühvorgang vorbereitet wird, verschoben werden kann.

Ein sauberes Ausräumen des ausgelaugten Kaffeemehlkuchens, ohne Funktionsstörungen des Brühkopfes hervorzurufen, wird gemäß Anspruch 12 dadurch erreicht, daß der Ausschieber eine vordere Ausschieberwand umfaßt und an dem Schlitten in eine Räumstellung sowie in eine Rücklaufstellung einstellbar gelagert ist, und zwar dergestalt, daß eine Unterseite der vorderen Ausschieberwand in der Räumstellung des Ausschiebers auf die Gleitfläche des Schlittens abgesenkt ist und in der Rücklaufstellung des Ausschiebers im Abstand über der Gleitfläche angehoben ist. Dadurch wird insbesondere bei dem Rücklauf des Schlittens aus dessen Auswurfstellung, die der Arbeitsstellung entspricht, in die Ausgangsstellung vermieden, daß Kaffeereste in die Gleitebene geschleppt werden.

Diese Einstellung des Ausschiebers wird gemäß Anspruch 13 bevorzugt dadurch erreicht, daß der Schlitten in einer Schiebekulisse zwischen einer vorderen Begrenzung an der Arbeitsstellung des Schlittens und einer hinteren Begrenzung bei dessen Ausgangsstellung verschiebbar ist und daß der Ausschieber durch Anstoßen an der vorderen Begrenzung in seine Rücklaufstellung verstellbar ist, das heißt, daß dessen vordere Ausschieberwand angehoben wird, wonach er durch Anstoßen an der hinteren Begrenzung in seine Räumstellung verstellbar ist, in der seine vordere Ausschieberwand auf die Gleitfläche abgesenkt wird. Diese Verstellung des Ausschiebers erfolgt also durch Anstoßen des Schlittens und benötigt keine gesonderten aktiven Antriebs- oder Steuerungselemente.

Hierzu ist im einzelnen gemäß Anspruch 14 der Ausschieber an dem Schlitten in dessen Verschieberichtung verschiebbar gelagert, wobei der Ausschieber einen Auflageboden umfaßt, mit dem er auf dem Schlitten aufliegt. Die vordere Ausschieberwand ist vor einem stirnseitigen Ende des Auflagebodens nach unten abgewinkelt. Desgleichen ist eine hintere Ausschieberwand hinter dem Schlitten nach unten abgewinkelt, wobei die hintere Ausschieberwand aber in keiner Stellung des Ausschiebers auf der Gleitfläche aufzuliegen braucht. Wesentlich sind an dem Auflageboden ausgeformte schräge Mitnahmenasen, die in der Räumstellung des Ausschiebers in Aufnahmenuten der Oberseite des Schlittens sitzen, bei Verschiebung des Ausschiebers gegenüber dem Schlitten durch Anstoßen des Ausschiebers an der vorderen Begrenzung jedoch aus den Aufnahmenuten heraus auf die Oberseite des Schlittens gleiten und dadurch angehoben werden, wogegen bei Verschiebung des an der hinteren Begrenzung anstoßenden Ausschiebens gegenüber dem Schlitten die Mitnahmenasen von der Oberseite des Schlittens in dessen Aufnahmenuten gleiten, womit der Ausschieber seine Räumstellung einnimmt. - Analog umgekehrt können gleichwirkend die schrägen Mitnahmenasen auch an der Oberseite des Schlittens ausgeformt sein und die schrägen Aufnahmenuten in dem Auflageboden des Ausschiebers.

Genauer sind es gemäß Anspruch 15 die vordere Ausschieberwand und die hintere Ausschieberwand des Schlittens, die bei Anstoßen an die vordere Begrenzung bzw. an die hintere Begrenzung die Positionierung des Ausschiebers in Bewegungsrichtung und senkrecht hierzu bewirken.

Damit die Verstellung des Ausschiebers auf dem Schlitten in dessen Längsrichtung und senkrecht hierzu nicht bereits erfolgt, wenn er an den ausgelaugten Kaffeemehlkuchen anstößt, wird der Ausschieber mittels einer Ausschieberfeder auf den Schlitten gedrückt. Es muß also eine Federkraft überwunden werden, bevor der Ausschieber mit seinen Mitnahmenasen auf die Oberseite des Schlittens gleiten kann.

Zu dem oben erwähnten elektromotorischen Schlittenantrieb gehören nach Anspruch 17 der Antriebsmotor mit dem Getriebe sowie ein Schwinghebel, der mit einem Abgang des Getriebes in Antriebsverbindung steht und mit dem Schlitten gekoppelt ist. Die Kopplung mit dem Schlitten erfolgt vorteilhaft elastisch nachgiebig, indem der Schwinghebel nahe der Schlittenkopplungsstelle entsprechend ausgebildet ist. Damit wird erreicht, daß das Anstoßen des Ausschiebers auf dem Schlitten an die vordere Begrenzung oder an die hintere Begrenzung der Bewegungsbahn des Schlittens, auch für den Fall, daß sich Kaffeemehlreste zwischen den Begrenzungen und dem Ausschieber befinden, abgefedert wird. Außerdem ist damit ein Toleranzausgleich gegeben, der eine weniger aufwendige Fertigung ermöglicht.

Die federnd nachgiebige Kopplung wird nach Anspruch 1 8 konkret dadurch erreicht, daß der Schwinghebel einen angetriebenen Schwinghebelarm und nahe der Schlittenkopplungsstelle des Schwinghebels ein Ankopplungsglied umfaßt, welches einerseits mit dem Schlitten in Verbindung steht und andererseits an dem Schwinghebelarm schwenkbar gelagert ist und durch Federn in eine Sollposition vorgespannt ist.

Der oben erwähnte Spindelzylinder zur Verstellung des Hubkolbens ist gemäß Anspruch 19 zweckmäßig mit einer Geschwindigkeitsmeßeinrichtung, bevorzugt einem Sensor mit Encoder ausgerüstet, mit der ein Geschwindigkeitsabfall der Drehgeschwindigkeit des Spindelzylinders erfaßt werden kann. Damit kann der Hubkolbenantrieb gestoppt werden, weil durch Geschwindigkeitsabfall eine gewünschte Verdichtung des Kaffeemehls in dem Brühzylinder erfaßt wird, woraus eine gleichmäßige Verdichtung des Kaffeemehls, die von der Kaffeemenge unabhängig ist, resultiert.

Weitere zweckmäßige Merkmale sind in den Ansprüchen 20 - 23 enthalten. Zu den mit ihnen erzielten vorteilhaften Wirkungen wird auf die nachfolgende Beschreibung hingewiesen.

Einzelheiten und Konkretisierungen von zwei Ausführungsbeispielen des Brühkopfes und dessen Steuerung ergeben sich aus der folgenden Beschreibung anhand einer Zeichnung mit 11 Figuren. Darin zeigen:
- Fig. 1: einen schematischen Längsschnitt durch einen Teil einer Espressomaschine im Bereich eines Brühkopfes in einer ersten Ausführungsform mit einem Schlitten in Ausgangsstellung, mit einer Brühkammerhülse und einem Hubkolben darin, jeweils in Ruheposition,

- Fig. 2: eine Ansicht gemäß Fig. 1, jedoch mit dem Schlitten in Arbeitsstellung, mit der Brühkammerhülse in Dichtungsposition und einem angehobenen Hubkolben unmittelbar vor bzw. während eines Brühvorgangs,
- Fig. 3: eine Ansicht gemäß Fig. 1, jedoch nach dem Brühvorgang, mit der Brühkammerhülse und dem Hubkolben wiederum in Ruheposition,
- Fig. 4: eine Ansicht gemäß Fig. 3, jedoch in Vorbereitung eines Räumvorgangs eines ausgelaugten Kaffeemehlkuchens mit dem Hubkolben in Räumposition,
- Fig.5: eine Ansicht gemäß Fig. 4, jedoch mit dem Schlitten und Ausschieber in Räumstellung,
- Fig. 6: einen schematischen Schnitt durch die erste Ausführungsform des Brühkopfes in der in Fig. 5 dargestellten Räumstellung, jedoch in einer Schnittebene, die gegenüber der Schnittebene in den Figuren 1 bis 5 um 90° gedreht ist,
- Fig. 7: eine Seitenansicht auf den Teil der Espressomaschine gemäß den Figuren 1, 3 und 4,
- Fig. 8: eine Draufsicht auf den Teil der Espressomaschine gemäß Fig. 7,
- Fig. 9: eine Ansicht im wesentlichen gemäß Fig. 2 auf den Schlitten, die Brühkammerhülse und den Hubkolben mit Spindelzylinder in einer zweiten Ausführungsform, bei welcher eine Kolbenstange des Hubkolbens in dem Spindelzylinder verschiebbar gelagert ist,

- Fig. 10: eine schematische Darstellung der Steuerung der Espressomaschine und
- Fig. 11: ausgewählte Elemente der Steuerung gemäß Fig. 10 in verschiedenen Schaltstellungen.

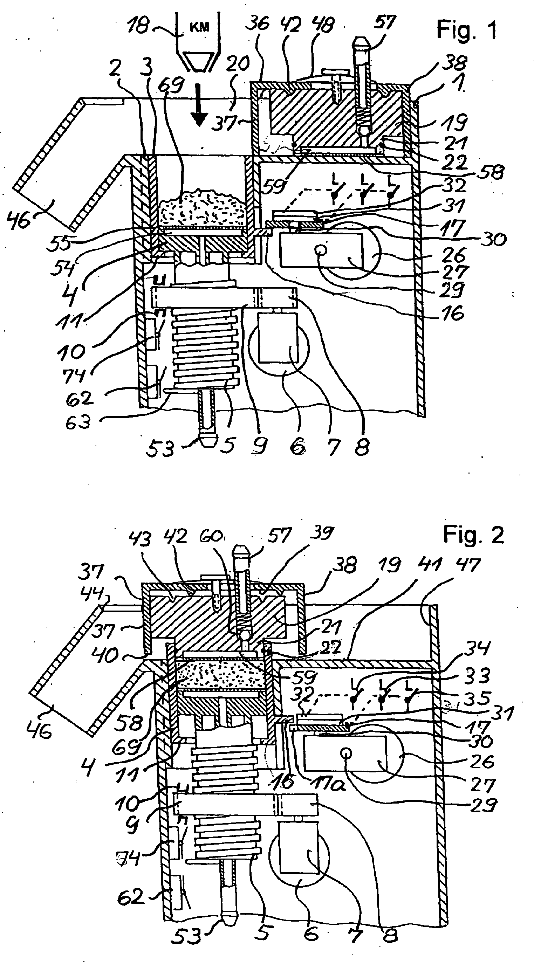

In Figur 1 ist mit 1 ein Gerätegehäuse einer Espressomaschine bezeichnet, mit dem ein Führungszylinder 2 einer zylindrischen Brühkammerhülse 3 fest verbunden ist. Die Brühkammerhülse 3 ist in dem Führungszylinder vertikal verschiebbar gelagert. In der Brühkammerhülse 3 ist ein parallel zu ihr verschiebbarer Hubkolben 4 angeordnet, der fest auf einem mehrgängigen Spindelzylinder 5 sitzt. Mit diesem Spindelzylinder 5 kann der Hubkolben 4 vertikal bezüglich des Gehäuses 1 verschoben werden.

Hierzu steht die Spindelhülse mit einem elektromotorischen Hubkolbenantrieb in Getriebverbindung, der einen Motor 6, der somit Spindelkolbenantriebsmotor ist, ein zugehöriges Getriebe 7, ein Antriebsritzel 8 und ein Spindelzylinderantriebsrad 9 umfaßt, welches einen mit der Spindel des Spindelzylinders 5 korrepondierende Innenverzahnung aufweist. Das Spindelzylinderantriebsrad 9 ist in einer Führung 10 drehbar, aber unverschiebbar geführt.

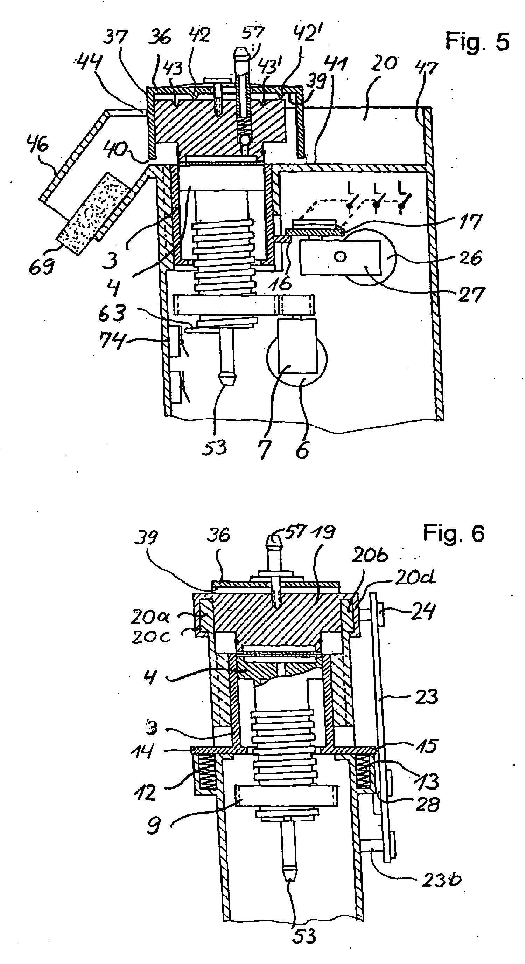

Die Brühkammerhülse 3 kann von dem Hubkolben 4 mittels eines an ihrem unteren inneren Ende befindlichen Mitnahmerings 1 1 , der als Druckring wirkt, gegen zwei gespannte Druckfedern 12, 13 gehalten werden, welche über Brühkammerfederarme 14, 15, siehe Figur 6, die Brühkammerhülse 3 nach oben zu drücken versuchen.

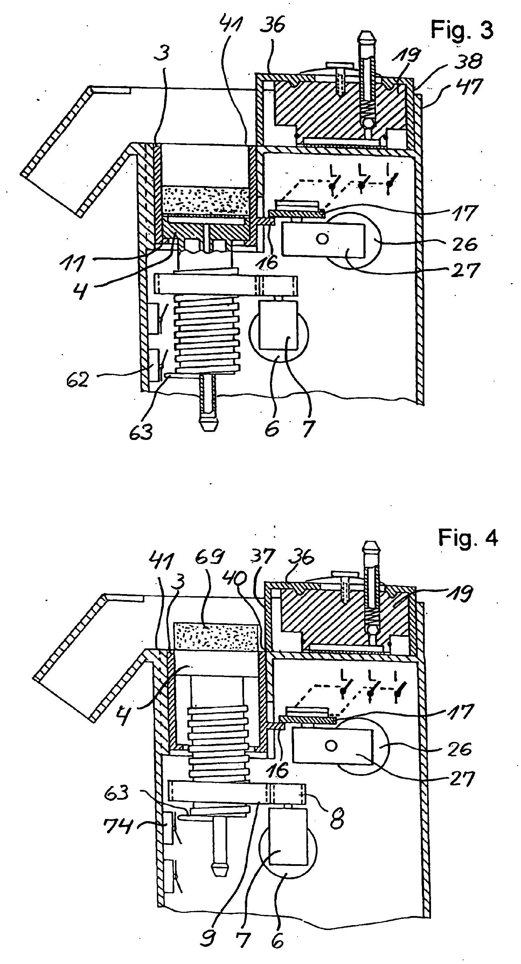

Eine am Umfang der Brühkammerhülse 3 fest angeordnete Sperrnase 16 kann in Verbindung mit einer Sperrscheibe 17 die Brühkammerhülse auch dann in der Ruheposition halten, wenn der Hubkolben 4 in Vorbereitung eines Auswurfvorgangs für den ausgelaugten Kaffeemehlkuchen nach oben bewegt wird, siehe Figuren 4 und 5.

Oberhalb der Brühkammerhülse 3 befindet sich eine Kaffeemühle 18, und zwar so, daß sie Kaffee direkt in die Brühkammerhülse 3 einmahlen kann.

Ebenfalls oberhalb der Brühkammerhülse in deren Ruheposition, siehe Figur 1, ist ein Schlitten 19, der auch als Gleitkörper bezeichnet werden kann, in einer dem Gehäuse fest zugeordneten Schiebekulisse 20 zwischen zwei Endpositionen horizontal verschiebbar. Bei den beiden Endpositionen handelt es sich, wie noch gezeigt werden wird, um eine Ausgangsstellung, wenn sich der Schlitten in seiner äußerst rechten Position befindet, siehe Figuren 1, 3, 4, 7, und um eine Arbeitsstellung, wenn der Schlitten in seine äußerst linke Position geschoben ist, siehe Figuren 2, 5.

Die Schiebekulisse 20 ist seitlich durch Schiebekulissenführungsschienen 20a, 20b begrenzt, die außen von Schlittenführungen 20c, 20d umfaßt werden, siehe Figur 6.

In einer Unterseite des Schlittens 19 ist ein kolbenförmiger, zylindrischer Abschnitt 21 ausgeformt, der eine Ringdichtung 22 trägt. Eine nicht bezeichnete Brühkammer, die zwischen der Oberseite des Hubkolbens 4, der inneren Umfangswandung Brühkammerhülse 3 und einer Unterseite des kolbenförmigen Abschnitts 21 gebildet wird, siehe Figur 2, ist mittels der Ringdichtung 22 zuverlässig druckdicht abgedichtet, wenn die Brühkammerhülse 3 über diese Ringdichtung in Dichtungsposition der Brühkammerhülse geschoben ist. Kleinere Höhenunterschiede in der Relativlage der Brühkammerhülse 3 und des kolbenförmigen Abschnitts 21 können die Dichtung nicht beeinträchtigen.

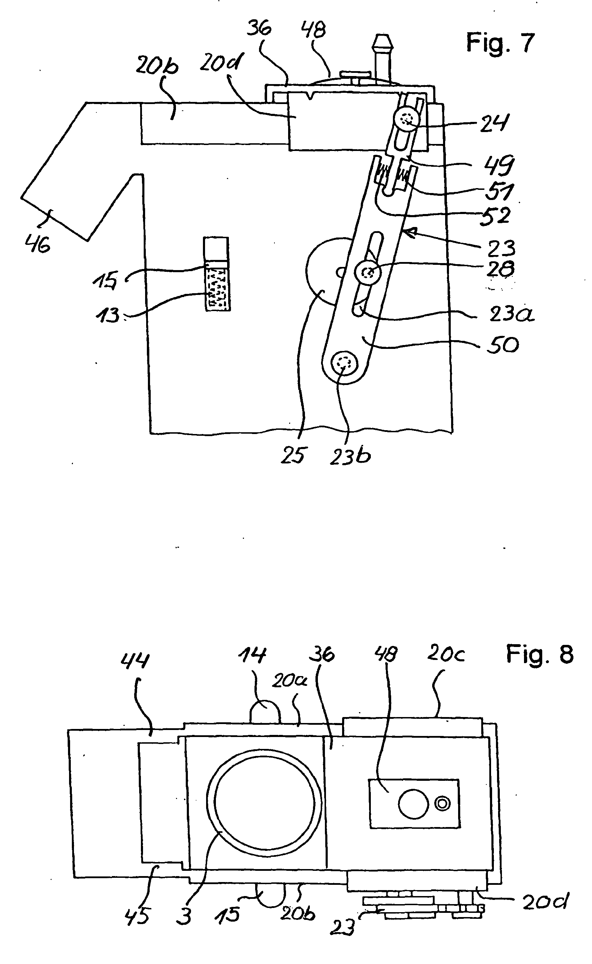

Der Schlitten 19 und mit ihm der kolbenförmige Abschnitt 21 sind durch einen elektromotorischen Antrieb verschiebbar, zu dem ein Schwinghebel 23 gehört, siehe Figur 7, der über einen Mitnahmebolzen 24 an dem Schlitten 19 angelenkt ist. Der um ein Schwinghebelschwenklager 23b schwenkbare Schwinghebel 23 wird von einer Antriebsscheibe 25, die von einem weiteren Motor 26 über ein zugehöriges Getriebe 27 angetrieben wird, und einem auf der Antriebsscheibe 25 befindlichen Antriebsbolzen 28, der in einem Längsschlitz 23a des Schwinghebels 23 eingreift, in jeweils eine seiner zwei Endpositionen verschoben.

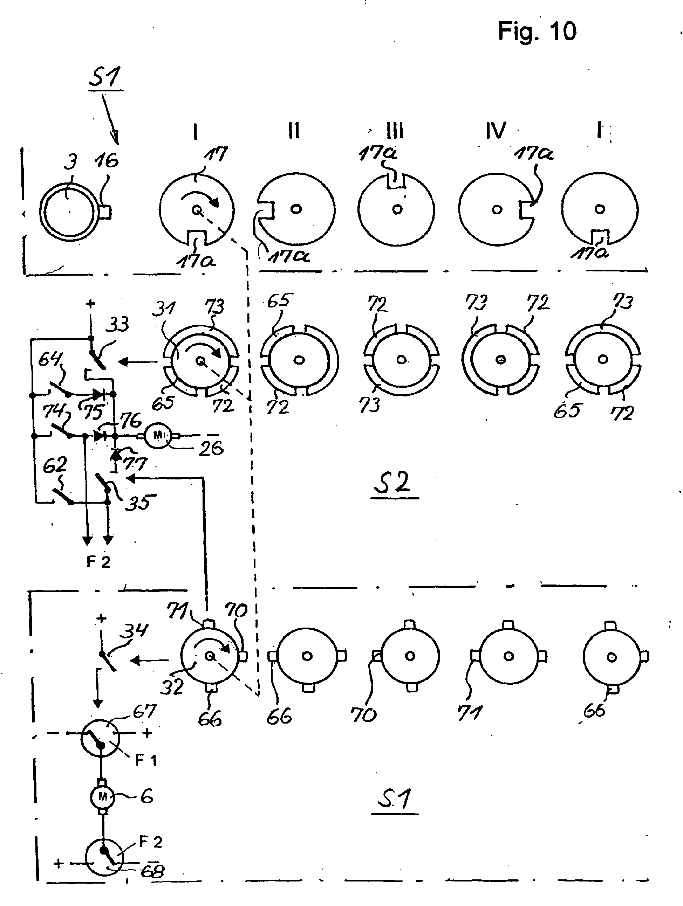

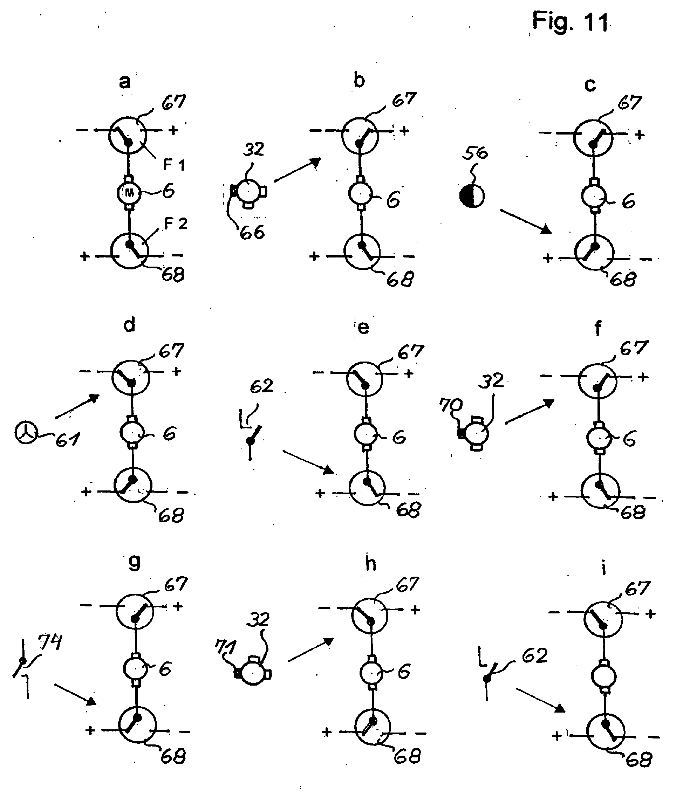

Im einzelnen umfaßt das Getriebe 27 des elektromotorischen Schlittenantriebs zwei mit unterschiedlicher Untersetzung konzipierte Abgänge 29, 30. Der Abgang 29 für den Schwinghebel macht für eine Bewegung des Schwinghebels 23, d.h. für eine Verschiebung des Schlittens mit dem kolbenförmigen Abschnitt 21 in eine seiner beiden Endpositionen jeweils eine halbe Umdrehung. Der zweite Abgang 30, siehe Figuren 1 und 2, steht mit der Sperrscheibe 17 in Verbindung, die mit der Sperrnase 16 kooperiert, sowie mit zwei fest verbundenen Nockenscheiben 31, 32. Die Nockenscheiben 31, 32 steuern die Positionen des Schlittens 19 bzw. dessen kolbenförmigen Abschnitts 21 sowie Teile der Bewegungen des Hubkolbens über zugehörige Kontakte 33, 34, 35. Der zweite Abgang 30 dreht synchron mit dem ersten Abgang 29 für den Schwinghebel 23 für jede halbe Umdrehung deren Antriebsscheibe 25 für den Schwinghebel eine viertel Umdrehung. Die damit bewirkte Steuerung wird unten in Verbindung mit den Figuren 10 und 11 erläutert.

Auf dem Schlitten 19 ist ein Ausschieber 36 in Bewegungsrichtung des Schlittens verschiebbar gelagert. Der Ausschieber 36 umfaßt eine vordere Ausschieberwand 37, eine hintere Ausschieberwand 38, die von einem Auflageboden 39 nach unten abgewinkelt sind, und zwar so, daß eine Unterseite 40 der vorderen Ausschieberwand auf einer Gleitfläche 41 der Schiebekulisse 20 gleiten kann, wenn sich der Ausschieber in seiner Räumstellung auf dem Schlitten 19 befindet. Aus dem Auflageboden 39 sind schräge Mitnahmenasen 42, 42' ausgeformt, die von ebenfalls schrägen Aufnahmenuten 43, 43' in dem Schlitten aufgenommen werden können. In diesem Fall schleift die Unterseite 40 der vorderen Ausschieberwand 37 auf der Gleitfläche 41 der Schiebekulisse 20. Andernfalls, wenn sich die Mitnahmenasen 42 auf der Oberseite des Ausschiebers 36 befinden, ist hingegen die Unterseite 40 der vorderen Ausschieberwand 37 von der Gleitfläche 41 abgehoben und bildet einen freien Abstand zu dieser. Die unterschiedlichen Höhenlagen der Unterseiten 40 der vorderen Ausschieberwand 37 werden durch Begrenzungen der Schlittenbewegungsbahn in der Schiebekulisse 20 eingestellt. Die eine Begrenzung wird durch zwei Anlaufpuffer 44, 45 gebildet, die an einer Arbeitsstellung des Schlittens 1 9 bei einem Auswurfschacht 46 angeordnet sind. Die andere Begrenzung ist eine Hinterwand 47 der Schiebekulisse bei der Ausgangsstellung des Schlittens 19. Wenn die vordere Ausschieberwand 37 an die beiden Anlaufpuffer 44, 45 stößt, schiebt sich der Ausschieber 36 nach hinten, wodurch seine Mitnahmenasen 42, 42', die bei einer Vorwärtsbewegung in den Aufnahmenuten 43, 43' des Schlittens 19 liegen, aus den Aufnahmenuten 43, 43' gedrückt werden. Dadurch wird der Ausschieber 36 angehoben und verbleibt in der angehobenen Stellung, d.h. der Rücklaufstellung während des gesamten Rücklaufs des Schlittens 19 in die Ausgangsposition bei der Hinterwand 47. Erreicht der Ausschieber 36 die Hinterwand 47, so daß die hintere Ausschieberwand 38 an die Hinterwand 47 anstößt, so wird der Ausschieber von der Hinterwand 47 nach vorne geschoben und fällt in seine Räumposition in den Aufnahmenuten 43, 43' zurück. Dies wird durch eine Ausschieberfeder 48 auf der Oberseite des Ausschiebers unterstützt, welche auch verhindert, daß der Ausschieber bei einem Auftreffen auf den ausgelaugten Kaffemehlkuchen 69 in seine Rücklaufstellung zurückgeschoben wird, bevor er den Kaffeemehlkuchen ausgestoßen hat und an die beiden Anlaufpuffer 44, 45 anstößt, siehe Figur 5. - Die Räumstellung des Ausschiebers 36 bei Anstoßen an die Hinterwand 47 der Schiebekulisse ist in Figur 3 gezeigt.

Zu einer sicheren Betätigung des Ausschiebers 36 dient eine Zweiteilung des Schwinghebels 23 an seinem Gleitkörper-Ankopplungsende. Hierzu ist ein Ankopplungsglied 49 am Ende eines angetriebenen Schwinghebelarms 50 schwenkbar gelagert, wobei das Ankopplungsglied 49 durch zwei Druckfedern 51, 52 in einer mittleren Sollage gehalten wird. Damit wird erreicht, daß die Anläufe des Schlittens 19 mit dem aufliegenden Ausschieber 36 an die Anlaufpuffer 44, 45 und in der hinteren Ausgangsstellung des Schlittens an der Hinterwand 47 definiert und abgefedert erfolgen, und zwar auch dann, wenn sich Kaffeereste zwischen dem Ausschieber und der Hinterwand 47 bzw. den Anlaufpuffern 44, 45 befinden. Mit dieser elastisch nachgiebigen Kupplung des Schwinghebels ist auch ein Toleranzausgleich erreicht.

Der Hubkolben 4, der auch als Brühkolben bezeichnet werden kann, ist mit einem Brühwasserzulaufstutzen 53, einer Brühwasserverteilerkammer 54 und mit einem Brühwasserverteilersieb 55 ausgestattet. Der die Brühkammer ergänzende kolbenförmige Abschnitt 21 auf der Unterseite des Schlittens ist mit einem Brühsudablaufstutzen 57, einem Brühsieb 58 und einer Brühsudsammelkammer 59 sowie einem Cremaventil 60 ausgerüstet, siehe insbesondere Figur 2. Nicht dargestellt sind flexible An- und Ablaufleitungen für den Brühwasserzulauf und den Kaffeesudablauf. In dem Brühwasserzulauf mit dem Brühwasserzulaufstutzen 53 befindet sich ein Durchflußmesser 61, der in Figur 11d als Symbol dargestellt ist und der nach Durchlauf einer vorgewählten Wassermenge den Brühwasserzulauf stoppt und ein Signal an eine Steuereinheit S1 der Steuerung des Hubkolbens abgibt, siehe auch Figur 10.

Der Spindelzylinder 5 an dem Hubkolben ist mit einem Sensor mit Encoder ausgerüstet, der die Verstellgeschwindigkeit des Spindelzylinders mißt und daraus für die Vertikalverschiebung des Hubkolbens 4 eine Stopposition bestimmt, wie weiter unten beschrieben.

Der beschriebene Brühkopf wird folgendermaßen zwangsgesteuert, damit Beschädigungen insbesondere im Bereich der Brühkammerhülse, des Ausschiebers und der Schlittens mit Sicherheit vermieden werden:

Zur Befüllung der Brühkammer, die durch die Brühkammerhülse 3 umschlossen ist, mit Kaffeemehl mittels der oberhalb der Brühkammerhülse angeordneten Kaffeemühle 18, befindet sich der Schlitten 19 mit dem kolbenförmigen Abschnitt 21 auf dessen Unterseite in seiner Ausgangsstellung gemäß Figur 1 ganz rechts auf der Schiebekulisse 20. Damit ist die Öffnung der Brühkammerhülse 3 freigegeben. Die Brühkammerhülse 3 befindet sich dabei in ihrer unteren Ruheposition, in der sie durch den Hubkolben 4 mittels des Mitnahmerings 11 gehalten wird. Die Kaffeemühle 18 mahlt Kaffee in die Brühkammerhülse in der Ruheposition ein, wobei sich der Hubkolben ebenfalls in seiner unteren Ruheposition befindet. In dieser Ruheposition schließt er einen Fußkontakt 62 mittels eines Betätigungsarmes 63, siehe Figur 1. Sobald eine vorgewählte Kaffeemenge durch die Kaffeemühle 18 eingemahlen ist, stoppt diese und schließt ihren Kontakt 64, der in Figur 10 gezeigt ist. Über den Kontakt 64 wird ein elektronisch verzögerter Startimpuls an den Antriebsmotor 26 des elektromotorischen Schlittenantriebs gegeben, der durch den Selbsthaltekontakt 33 durch einen Nocken 65 der Nockenscheibe 31 geschlossen bleibt, siehe Figur 10. Dadurch startet der elektromotorische Schlittenantrieb mit dem Antriebsmotor 26 und schiebt mittels des Schwinghebels 23 und der mit ihm verbundenen weiteren Antriebselemente des elektromotorischen Schlittenantriebs, nämlich der Antriebsscheibe 25, des Antriebsscheibenbolzens 28, des Ankopplungsglieds 49, der Druckfedern 51, 52 und des Mitnahmebolzens 24, Schlitten 19 mit dem kolbenförmigen Abschnitt 21 auf der Unterseite des Schlittens nach vorne, d.h. in Figur 1 nach links, bis der auf dem Schlitten 19 aufliegende Ausschieber 36 an die Anlaufpuffer 44, 45 anläuft und die Arbeitsstellung des Schlittens mit dem kolbenförmigen Abschnitt 21 erreicht ist, wie in Figur 2 dargestellt.

Gleichzeitig mit der Verschiebung des Schlittens 19 dreht der Abgang 30 des Getriebes 27 des elektromotorischen Schlittenantriebs die Sperrscheibe 17 sowie die Nockenscheibe 31 für die Schlittenantriebssteuerung und die Nockenscheibe 32 für die Hubkolbenantriebssteuerung gemäß Figur 10 von Position I in Position II um 90°. Bei Erreichen von 90° fällt der Selbsthaltekontakt 33 von dem Nocken 65 ab gemäß Position II in Figur 10. In dieser Position schließt ein Nocken 66 der Nockenscheibe 32 für die Hubkolbenantriebssteuerung den Kontakt 34, der den Startimpuls an die Hubkolbensteuereinheit für die Hubkolbenverschiebung gibt.

Die Hubkolbensteuereinheit umfaßt eine doppelte elektronische Flip-Flop-Schaltung F1, F2 (67, 68), die in Figur 10 und Figur 11 als mechanische Schalter dargestellt sind. Je eines der Flip-Flops 67, 68 ist in eine Zuleitung des Motors 6 des elektromotorischen Hubkolbenantriebs eingefügt und das andere Flip-Flop in die Ableitung dieses Motors. In ihrer Ausgangsposition I in Figur 10 liegen beide Flip-Flops an Minuspotential, siehe auch Fig. 11a.

Der oben erwähnte Startimpuls, der durch den Nocken 66 ausgelöst wird, legt das Flip-Flop F1 bzw. 67 an Pluspotential, wie in Figur 1 1 b dargestellt.

Durch die Umschaltung des Flip-Flops F1 67 startet der Motor 6 des Hubkolbenantriebs und bewegt den Hubkolben über das Getriebe 7, das Antriebsritzel 8, das Spindelzylinder-Antriebsrad 9 und den Spindelzylinder 5 nach oben. Dabei wird das zuvor eingemahlene Kaffeemehl verdichtet, wie in Figur 2 bei 69 angedeutet.Für diesen Hub des Hubkolbens liegt die Aussparung 17a der Sperrscheibe 17 über der Sperrnase 16 der Brühkammerhülse 3, wie in Figur 10 bei Position II gezeigt, und die Sprerrnase 16 kann durch die Aussparung 17a hindurchtreten, wodurch die Brühkammerhülse 3 unter dem Druck der Druckfedern 12, 13 dem Hubkolben 4 während eines Teilhubs folgt, bis sich ein nicht bezeichneter oberer Abschnitt des Hubkolbens 4 über dem kolbenförmigen Abschnitt 21 auf der Unterseite des Schlittens 1 9 geschoben hat, wie ebenfalls aus Figur 2 ersichtlich. Die damit geschlossene Brühkammer wird durch die Ringdichtung 20 an dem kolbenförmigen Abschnitt 21 auf der Unterseite des Schlittens 19 in dieser Dichtungsposition der Brühkammerhülse 3 sicher abgedichtet. Diese Position der Brühkammerhülse 3 kann sicherheitshalber durch den betätigten Brühkammerhülsenpositionskontakt 80 - siehe Figur 6 - signalisiert werden und den Brühvorgang gestatten. Die Stellung, die der Schlitten 19 dabei in Figur 2 einnimmt, wird als Arbeitsstellung bezeichnet.

Der Hubkolben 4 kann über den Teilhub hinaus, bei dem die Brühkammerhülse 3 dem Hubkolben folgt, durch den Spindelzylinder 5 weiter angehoben werden, um das Kaffeemehl unabhängig von der Kaffeemenge in einem definierten Maß vorzuverdichten. Hierzu mißt ein Sensor mit Encoder 56 des Spindelzylinders die Aufwärtsbewegung des Hubkolbens 4, indem die Umdrehungsgeschwindigkeit des Spindelzylinders erfaßt wird. Bei Erreichen eines bestimmten Geschwindigkeitsabfalls, der durch die Belastung des Motors 6 bei der Kaffeemehlverdichtung verursacht wird, schaltet der Encoder 56 den Motor ab, indem er einen Stopimpuls an das Flip-Flop, F2 68 abgibt, wie in Figur 11 bei Position c gezeigt: Das Flip-Flop F2, 68 schaltet auf Pluspotential und trennt damit den Motor 6 des Hubkolbenantriebs von der Stromversorgung. Gleichzeitig wird ein Signal zum Brühbeginn an eine in der Zeichnung nicht dargestellte Brühwasserpumpe abgegeben.

Nach Erreichen einer vorgewählten Brühwassermenge, die durch den in dem Brühwasserzulauf angeordneten Durchflußmesser 61 erfaßt wird, gibt dieser ein Signal an das Flip-Flop F1, 67 ab, wie in Figur 11, Position d, angedeutet. Dadurch wird die Drehrichtung des Hubkolbenmotors 6 umgekehrt, der Motor 6 gestartet und der Hubkolben 4 läuft nach unten in seine Ruheposition zurück. Diese Ruheposition des Hubkolbens ist in Figur 3 dargestellt, in der sich auch die Brühkammerhülse 3 in ihrer Ruheposition befindet, nachdem sie die Druckfedern 12, 13 mittels des Mitnahmerings 11 gespannt hat.

Sobald der Hubkolben 4 seine Ruheposition erreicht hat, schließt der Betätigungsarm 63 des Spindelzylinders 5 den Fußkontakt 62, der ein Stopsignal an das Flip-Flop F2, 68 abgibt, wie in Figur 11, Position e angedeutet. Dadurch wird der Motor 6 des Hubkolbenantriebs von der Stromversorgung getrennt und gestoppt. Gleichzeitig gibt der Fußkontakt 62 in der Bewegungsbahn des Spindelzylinders 5 ein Startsignal an den elektromotorischen Schlittenantrieb mit dem Antriebsmotor 26.

Da die Nockenscheibe 32 der Hubkolbenantriebssteuerung synchron mit der Sperrscheibe 17 und der Nockenscheibe 31 dreht, halten Nocken 66, 70, 71 der Nockenscheibe 32 den Kontakt 35 in allen Positionen mit Ausnahme der Position II in Figur 10 offen. Der Kontakt 35 ist somit nur in der Position II in Figur 10 geschlossen, und nur in dieser Position kann der Fußkontakt 62 einen Startimpuls an den Antriebsmotor 26 des Schlittenantriebs abgeben. Dies verhindert, daß nach einem Funktionsablauf ohne weiteres ein weiterer Funktionsablauf in Gang gesetzt wird, wenn nach Beendigung eines Funktionsablaufs der Fußkontakt 62 geschlossen ist. ― Der Startimpuls liegt elektronisch verzögert so lange an dem Antriebsmotor 26 des Schlittenantriebs an, bis der Nocken 72 der Nockenscheibe 31 den Selbsthaltekontakt 33 des Antriebsmotors 26 schließt. Nach dem Motorstart dreht der Abgang 29 des Schwinghebelantriebs die Antriebsscheibe 25 des Schwinghebels um 180° im gleichen Drehsinn wie bei der voranstehenden Drehung, wodurch der Schwinghebel 23 in seine untere Ausgangsposition geschoben wird, die in Figur 7 dargestellt ist und der die Ausgangsstellung des Schlittens 19 in der äußerst rechten Position in der Schiebekulisse 20 entspricht. Die von dem Schlitten 19 erneut eingenommene Ausgangsstellung ist in Figur 3 dargestellt.

Außerdem dreht der Abgang 30 des Getriebes 27 des Schlittenantriebs die Nockenscheiben 31, 32 um 90°, und der Selbsthaltekontakt 33 wird von den Nocken 72 entlastet, wodurch der Antriebsmotor 26 des Schlittenantriebs gestoppt wird, wie in Figur 10 bei Position III dargestellt.

Nachdem die hintere, d.h. in Figur 3 rechte Ausgangsstellung des Schlittens 19 erreicht ist, schließt der Nocken 70 der Nockenscheibe 32 den Kontakt 34, der ein Signal an das Flip-Flop F1, 67 als Bestandteil der Steuereinheit des Unterkolbenantriebs abgibt gemäß Position f in Figur 11. Durch dieses Signal wird die Drehrichtung des Motors 6 des Hubkolbenantriebs erneut gewechselt, der Motor 6 läuft an und der Hubkolben 4 wird mit dem ausgelaugten Kaffeemehlkuchen 69 nach oben bewegt. Da sich die Sperrscheibe 17 bei der Verschiebung des Schlittens 19 in seine Ausgangsstellung um 90° gedreht hat, liegt die Aussparung 17a der Sperrscheibe 17 nicht mehr über der Sperrnase 16 der Brühkammerhülse 3, so daß diese jetzt der Aufwärtsbewegung des Hubkolbens 4 nicht folgen kann. Der Hubkolben 4 fährt so lange hoch, bis er in seiner obersten Position, die in der Ebene der Gleitfläche des kolbenförmigen Abschnitts 21 des Schlittens 19 liegt, der Betätigungsarm 63 des Spindelzylinders 5 einen Kopfkontakt 74 in dessen Bewegungsbahn schließt, der ein Signal an das Flip-Flop F2, 68 abgibt, so daß dieses die Schaltstellung gemäß Position f in Figur 11 annimmt, auf Pluspotential schaltet und den Motor 6 des Hubkolbenantriebs stoppt. Damit verbleibt der Hubkolben in der in Figur 4 dargestellten obersten Position, in der der ausgelaugte Kaffeemehlkuchen 69 auf die Höhe der Gleitfläche des kolbenförmigen Abschnitts 21 des Schlittens 19 angehoben ist.

Der Kopfkontakt 74 in der Bewegungsbahn des Betätigungsarms 63 ergibt in der in Figur 4 dargestellten Position außerdem einen Startimpuls an den Antriebsmotor 26 des Schlittenantriebs ab, wobei der Startimpuls elektronisch so lange verzögert wird und an dem Motor 26 anliegt, bis dieser die Nockenscheibe 31 so weit gedreht hat, daß der Nocken 73 den Selbsthaltekontakt 33 schließt. Damit fährt der Schlitten 19 nach vorn, d.h. in Figur 4 nach links, in die in Figur 5 gezeigte Stellung, wobei er den ausgelaugten Kaffeemehlkuchen 69 mit abgesenkter vorderer Ausschieberwandunterseite 40, siehe Figur 3, in den Auswurfschacht 46 schiebt. Der Ausschieber 36 nimmt dabei seine in Figur 4 gezeigte Räumstellung auf dem Schlitten 19 ein. Erst, wenn die vordere Ausschieberwand 37, wie in Figur 5 dargestellt, an die Auslaufpuffer 44, 45 läuft - der Anlaufpuffer 45 ist nur in Figur 8 erkennbar - gleitet der Ausschieber 36 auf die Oberseite des Schlittens 19 und die vordere Ausschieberwandunterseite 40 wird über die Gleitbahn angehoben, siehe Figur 5.

Nach erfolgtem Ausschub fährt der Schlitten 19 ohne Stop sofort wieder in seine hintere, d.h. in Figur 1 rechte Ausgangsstellung, da der Nocken 73 der Nockenscheibe 31 180° überdeckt und mittels des Selbsthaltekontakts 33 den Motor 26 des Schlittenantriebs aus der Position III in Figur 10 über die Position IV in Figur 10 an der Stromversorgung hält und der Selbsthaltekontakt 33 erst in Position 1 der Figur 10 von dem Nocken 73 abfällt. Dies bedeutet, daß die Antriebsscheibe 25 für den Antrieb des Schwinghebels 23 bzw. den Schlittenantrieb eine volle Umdrehung über 360° zurücklegt, und der Schlitten 19 mit dem kolbenförmigen Abschnitt 21 auf seiner Unterseite ohne Stop in die Ausgangsstellung in Figur 1 und Figur 7 geschoben wird.

Gleichzeitig mit dieser Rückstellbewegung des Schlittens wird der Hubkolben in seine unterste Ruheposition zurückgestellt, indem der Antriebsmotor 26 des Schlittenantriebs und dessen Getriebe mit dem Abgang 30 die Nockenscheibe 32 um 90° gedreht ist - entsprechend dem 90°-Takt des Abgangs 30 - schließt der Nocken 71 den Kontakt 34. Dadurch gibt der Kontakt 34 einen Impuls an das Flip-Flop F1, 67 ab, welches auf Minuspotential schaltet, wie in Position h in Figur 11 angedeutet. Damit fährt der Spindelzylinder 5 mit dem Hubkolben 4 nach unten, bis der Betätigungsarm 63 den Fußkontakt 62 schließt, welcher daraufhin ein Signal an das Flip-Flop F2, 68 abgibt, welches den Motor 6 auf Minuspotential schaltet, siehe Position i entsprechend Position a in Figur 11. In dieser Position ist der Antrieb des Spindelzylinders 5 gestoppt und der Hubkolben befindet sich in seiner unteren Ruheposition.

Da in dieser Ruheposition der Kontakt 35 durch den Nocken 71 der Nockenscheibe 32 geöffnet ist, siehe Position I in Figur 10, wird ein Startimpuls auf den Antriebsmotor 26 des Schlittenantriebs durch den Fußkontakt 62 verhindert, der sonst einen unkontrollierten Start der geschilderten Funktionen erneut auslösen würde. Vielmehr bleibt ein volles Arbeitsspiel beendet und alle Funktionsteile sind in ihren Ausgangspositionen für ein neues Arbeitsspiel bereit, welches durch die Betätigung der Kaffeemühle ausgelöst wird.

In Figur 10 sind die Funktionsteile, die zu der Steuereinheit für den Hubkolbenantrieb einerseits gehören und die der Steuereinheit für den Schlittenantrieb andererseits zugeordnet werden können, zusammengefaßt.

Zu der Steuereinheit S2 für den Schlittenantrieb mit dem Antriebsmotor 26 ist zu bemerken, daß die hierin angeordneten Dioden 75, 76, 77 bewirken, daß die Steuerimpulse der Kontakte 64, 62, 74 abhängig von den Stellungen der Nockenscheiben 31 und 32 nur die gewünschten Funktionsteile erreichen.

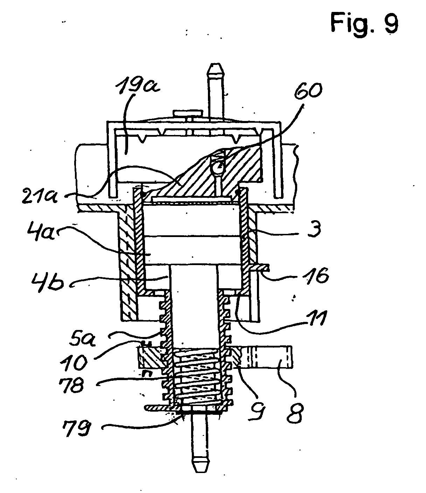

In der in Figur 9 dargestellten zweiten Ausführungsform des Brühkopfes sind gleiche Funktionsteile wie in der ersten Ausführungsform mit übereinstimmenden Bezugszeichen bezeichnet, ähnliche Funktionsteile mit abgewandelten Bezugszeichen. In der zweiten Ausführungsform ist der Hubkolben 4a innerhalb des Spindelzylinders 5a gegen eine Druckfeder 78 verschiebbar gelagert, die an einem nicht bezeichneten unteren Bund in dem Spindelzylinder 5a unten aufsitzt. Der Hubkolben 4a wird in seiner gezeichneten oberen Endstellung durch einen unten auf seine Hubkolbenstange 4b aufgebrachten Sprengring 79 gehalten. Die Druckfeder ist so hart, daß sie bei einer Aufwärtsbewegung des Hubkolbens 4a und der Kaffeemehlverdichtung durch den Spindelzylinder 5a nicht zusammengedrückt wird. Vielmehr wird sie erst unter dem hohen Druck in die Brühkammer einlaufenden Brühwassers über dem Hubkolben 4a zusammengedrückt, wodurch sich der Brühraum vergrößert und das Kaffeemehl vor dem eigentlichen Brühvorgang unter Druck besser durchfeuchtet wird. Dies führt zu einer vervollkommneten Crema-Bildung. Erst, wenn das Crema-Ventil 60 in dem Schnitten 19a bei ca. 6 bar öffnet, entspannt sich die Druckfeder 78 unter Verkleinerung der Brühkammer.

Zu der oben detalliert beschriebenen Zwangssteuerung wird bemerkt, daß diese mit gleichwirkenden Mitteln, insbesondere mit einem Microcontroller ausgeführt werden kann. Wesentlich ist bei der Zwangssteuerung, daß die Brühkammerhülse 3 in ihre Dichtungsposition geschoben ist, bevor in der mit ihr gebildeten Brühkammer Kaffeemehl verdichtet wird und Brühwasser eingeleitet wird, und daß die Brühkammerhülse aus der Bewegungsbahn des Schlittens in ihre Ruheposition abgesenkt ist, bevor der Schlitten zusammen mit dem Ausschieber verschoben wird, insbesondere wenn der Ausschieber auf die Gleitbhan des Schlittens abgesenkt ist.

### Bezugszahlen

- 1: Gerätegehäuse
- 2: Führungshülse
- 3: Brühkammerhülse
- 4, 4a: Hubkolben
- 4b: Hubkolbenstange
- 5, 5a: Spindelzylinder
- 6: (Spindelantriebs)Motor
- 7: Getriebe
- 8: Antriebsritzel
- 9: Spindelzylinder-Antriebsrad
- 10: Führung
- 11: Mitnahmering (Druckring)
- 12: Druckfedern
- 13: Druckfedern
- 14a: (Brühzylinder-)Federarm
- 14b: (Brühzylinder-)Federarm
- 15a: (Brühzylinder-)Federarm
- 15b: (Brühzylinder-)Federarm
- 16: Sperrnase
- 17: Sperrscheibe
- 17a: Sperrscheiben-Aussparung
- 18: Kaffeemühle
- 19: (Gleitkörper) Schlitten
- 20: Schiebekulisse
- 20a: Schiebekulisseführungsschiene
- 20b: Schiebekulisseführungsschiene
- 20c: Schlittenführung
- 20d: Schlittenführung
- 21: (Oberkolben) kolbenförmiger Abschnitt auf Unterseite des Schlittens
- 22: Ringdichtung
- 23: Schwinghebel
- 23a: Längsschlitz
- 23b: Schwinghebelschwenklager
- 24: Mitnahmebolzen
- 25: (Schwinghebel-)Antriebsscheibe
- 26: Antriebsmotor
- 27: Getriebe
- 28: (Schwinghebel-)Antriebsscheibenbolzen
- 29: 1. Abgang (für Schwinghebel)
- 30: 2. Abgang (für Sperrscheibe, Nockenscheiben)
- 31: Nockenscheibe für Oberkolbenantrieb-Steuerung
- 32: Nockenscheibe der Hubkolbenantrieb-Steuerung
- 33: Selbsthaltekontakt
- 34: Kontakt für Nocken 66, 70, 71
- 35: Kontakt
- 36: Ausschieber
- 37: vordere Ausschieberwand
- 38: hintere Ausschieberwand
- 39: Auflageboden
- 40: vordere Ausschieberwand-Unterseite
- 41: Gleitfläche
- 42: Mitnahmenase
- 42': Mitnahmenase
- 43: Aufnahmenut
- 43': Aufnahmenut
- 44: Anlaufpuffer
- 45: Anlaufpuffer
- 46: Auswurfschacht
- 47: (Schiebekulisse-)Hinterwand
- 48: Ausschieberfeder
- 49: Ankopplungsglied
- 50: Schwinghebelarm
- 51: Druckfeder
- 52: Druckfeder
- 53: Brühwasserzulaufstutzen
- 54: Brühwasserverteilkammer
- 55': Brühwasserverteilersieb
- 56: Sensor mit Encoder
- 57: Brühsudablaufstutzen
- 58: Brühsieb
- 59: Brühsudsammelkammer
- 60: Cremaventil
- 61: (flow-meter) Durchflußmesser
- 62: Fußkontakt
- 63: (Spindelkolben-) Betätigungsarm
- 64: Kaffeemühlen-)Kontakt
- 65: Nocken für 33
- 66: Nocken für 34 und 35
- 67: flip-flop F1
- 68: flip-flop F2
- 69: Kaffeemehlkuchen
- 70: Nocken für 34 und 35
- 71: Nocken für 34 und 35
- 72: Nocken für 33
- 73: Nocken für 33
- 74: Kopfkontakt
- 75: Kontakt
- 76: Diode
- 77: Diode
- 78: Druckfeder
- 79: Sprengring
- 80: Brühkammerhülsenpositionskontakt

- S1: Steuereinheit Hubkolbenantrieb
- S2: Steuereinheit Schlittenantrieb

## Patentansprüche

1. Brühkopf einer Espressomaschine mit einer druckdicht verschließbaren Brühkammer mit einem Einlaß für Heißwasser, mit einer Einfüllöffnung für frisches Kaffeemehl, mit einem Auslauf für frisch gebrühten Espresso und mit einem in der Brühkammer innerhalb deren Umfangswandung angeordneten zwangsgesteuerten Hubkolben (4, 4a), mit dem nach einem Brühvorgang ein ausgelaugter Kaffeemehlkuchen (69) bis zu einem oberen Rand der Umfangswandung angehoben wird, von wo der Kaffeemehlkuchen (69) mit einem Ausschieber seitlich abgeschoben wird, wobei der Ausschieber (36) einem Schlitten (19) zugeordnet ist, der an einer Gleitfläche (41) über eine Öffnung der Brühkammer verfahrbar ist und der eine Dichtung aufweist, mit der die Öffnung der Brühkammer in einer Arbeitsstellung des Schlittens (19) abdichtbar ist,
**gekennzeichnet durch**
eine die Umfangswandung der Brühkammer bildende, im wesentlichen senkrecht zu der Ebene der Gleitfläche (41) verfahrbare Brühkammerhülse (3), die zwangsgesteuert in der Arbeitsstellung (Fig. 2, 9) des Schlittens (19) **durch** die Ebene der Gleitfläche (41) hindurch in eine Dichtungsposition verfahrbar ist, in der die Brühkammer mittels der Dichtung abgedichtet ist, und nach einem Brühvorgang aus der Ebene der Gleitfläche (41) in eine Ruheposition zurückfahrbar ist, so daß der Schlitten (19) in eine Ausgangsstellung (Fig. 1, 3, 4, 7) neben der Brühkammer verschiebbar ist.

2. Brühkopf nach Anspruch 1,
**dadurch gekennzeichnet,**
**daß** die Dichtung als Ringdichtung (22) ausgebildet ist und auf einem im wesentlichen kolbenförmigen Abschnitt (21) auf der Unterseite des Schlittens (19) aufgebracht ist.

3. Brühkopf nach Anspruch 2,
**dadurch gekennzeichnet,**
**daß** ein oberer Abschnitt der Brühkammerhülse (3) über die Ringdichtung (22) verfahrbar ist und diese in der Dichtungsposition einfaßt.

4. Brühkopf nach wenigstens einem der Ansprüche 1 bis 3,
**dadurch gekennzeichnet,**
**daß** der Hubkolben (4, 4a), der mit einem Hubkolbenantrieb in Verbindung steht, in der Brühkammerhülse (3) verschiebbar ist, **daß** die Brühkammerhülse (3) unter Federbelastung steht, welche die Brühkammerhülse (3) in die Dichtungsposition zu verfahren sucht,
**daß** die Brühkammerhülse (3) einen Mitnahmering (11) aufweist, der an dem Hubkolben (4, 4a) unter der Federbelastung zur Anlage gelangen kann, um die Brühkammerhülse (3) zusammen mit dem Hubkolben (4, 4a) über einen Teilhub zu verfahren, und
**daß** die Brühkammerhülse (3) in ihrer Ruheposition mittels einer Sperrnase (16) lösbar arretierbar ist.

5. Brühkopf nach Anspruch 4,
**dadurch gekennzeichnet,**
**daß** die Federbelastung der Brühkammerhülse (3) durch wenigstens eine Druckfeder (12, 13) erfolgt, die an der Brühkammerhülse (3) mittelbar oder unmittelbar angreift.

6. Brühkopf nach wenigstens einem der Ansprüche 4 und 5,
**dadurch gekennzeichnet,**
**daß** dem Hubkolben (4, 4a) ein Spindelzylinder (5, 5a) zugeordnet ist, der durch den Mitnahmering (11) hindurchreicht und mit einem elektromotorischen Hubkolbenantrieb in Getriebeverbindung steht.

7. Brühkopf nach wenigstens einem der Ansprüche 4 bis 6,
**dadurch gekennzeichnet,**
**daß** die Sperrnase (16), mit der die Brühkammerhülse in ihrer Ruheposition lösbar arretierbar ist, in Wirkverbindung mit einem elektromotorischen Schlittenantrieb steht.

8. Brühkopf nach Anspruch 7,
**dadurch gekennzeichnet,**
**daß** der elektromotorische Schlittenantrieb einen Antriebsmotor (26) mit Getriebe (27) umfaßt und daß ein Abgang (30) des Getriebes (27) mit einer Sperrscheibe (17) in Verbindung steht, an der die Sperrnase (16) über einen Teil-Drehbereich der Sperrscheibe (17) angreift.

9. Brühkopf nach wenigstens einem der Ansprüche 1 bis 7,
**dadurch gekennzeichnet,**
**daß** die Brühkammerhülse (3) in einer ortsfesten Führungshülse (2) linear verschiebbar geführt ist.

10. Brühkopf nach wenigstens einem der Ansprüche 1 bis 9,
**dadurch gekennzeichnet,**
**daß** die Ebene der Gleitfläche (41) des Schlittens (19) im wesentlichen horizontal liegt und daß die Brühkammerhülse (3) im wesentlichen vertikal heb- und absenkbar ist.

11. Brühkopf nach wenigstens einem der Ansprüche 1 bis 10,
**dadurch gekennzeichnet,**
**daß** der Schlitten (19) lediglich zwischen zwei Endstellungen, nämlich der Arbeitsstellung (Fig. 2, 9) und einer Ausgangsstellung (Fig. 1, 3, 4, 7), verschiebbar ist.

12. Brühkopf nach wenigstens einem der Ansprüche 1 bis 11,
**dadurch gekennzeichnet,**
**daß** der Ausschieber (36) eine vordere Ausschieberwand (37) umfaßt und an dem Schlitten (19) in eine Räumstellung sowie in eine Rücklaufstellung einstellbar gelagert ist, dergestalt, daß eine Unterseite (40) der vorderen Ausschieberwand in der Räumstellung des Ausschiebers (36) auf die Gleitfläche (41) des Schlittens (19) abgesenkt ist und in der Rücklaufstellung des Ausschiebers (36) im Abstand über der Gleitfläche (41) angehoben ist.

13. Brühkopf nach Anspruch 12,
**dadurch gekennzeichnet,**
**daß** der Schlitten (19) in einer Schiebekulisse (20) zwischen einer vorderen Begrenzung (44, 45) an der Arbeitsstellung des Schlittens (19) und einer hinteren Begrenzung (47) bei dessen Ausgangsstellung verschiebbar ist, und
**daß** der Ausschieber (36) durch Anstoßen an der vorderen Begrenzung (44, 45) in seine Rücklaufstellung verstellbar ist und durch Anstoßen an der hinteren Begrenzung (47) in seine Räumstellung verstellbar ist.

14. Brühkopf nach den Ansprüchen 12 und 13,
**dadurch gekennzeichnet,**
**daß** der Ausschieber (36) an dem Schlitten (19) in dessen Verschieberichtung verschiebbar gelagert ist, daß der Ausschieber (36) einen Auflageboden (39) umfaßt, mit dem er auf dem Schlitten (19) zur Auflage gelangen kann,
**daß** von stirnseitigen Enden des Auflagebodens (39) die vordere Ausschieberwand (37) vor dem Schlitten (19) und eine hintere Ausschieberwand (38) hinter dem Schlitten (19) nach unten abgewinkelt sind,
**daß** an dem Auflageboden (39) schräge Mitnahmenasen (42, 42') ausgeformt sind, die in der Räumstellung des Ausschiebers (36) in Aufnahmenuten (43, 43') der Oberseite des Schlittens (19) sitzen, bei Verschiebung des Ausschiebers (36) gegenüber dem Schlitten (19) durch Anstoßen des Ausschiebers (36) an der vorderen Begrenzung (44, 45) aus den Aufnahmenuten (43, 43') heraus auf die Oberseite des Schlittens (19) in die Rücklaufstellung gleiten und bei Verschiebung des an der hinteren Begrenzung (47) anstoßenden Ausschiebers (36) gegenüber dem Schlitten (19)von der Oberseite des Schlittens in die Aufnahmenuten (43, 43') in Räumstellung gleiten.

15. Brühkopf nach Anspruch 14,
**dadurch gekennzeichnet,**
**daß** jeweils die vordere Ausschieberwand (37) und die hintere Ausschieberwand (38) in einer der Endstellungen des Schlittens an die vordere Begrenzung (44, 45) bzw. die hintere Begrenzung (47) anstoßen.

16. Brühkopf nach wenigstens einem der Ansprüche 14 und 15,
**dadurch gekennzeichnet,**
**daß** der Ausschieber (36) durch eine Ausschieberfeder (48) auf den Schlitten (19) gedrückt wird.

17. Brühkopf nach wenigstens einem der Ansprüche 1 bis 15,
**dadurch gekennzeichnet,**
**daß** der elektromotorische Schlittenantrieb außer dem Antriebsmotor (26) mit dem Getriebe (27) einen Schwinghebel (23) umfaßt, der mit einem Abgang (29) des Getriebes (27) in Antriebsverbindung steht und mit dem Schlitten (19) gekoppelt ist und
**daß** der Schwinghebel (23) nahe einer Schlitten-Kopplungsstelle federnd elastisch nachgiebig ausgebildet ist.

18. Brühkopf nach Anspruch 17,
**dadurch gekennzeichnet,**
**daß** der Schwinghebel (23) einen angetriebenen Schwinghebelarm (50) und nahe der Schlitten-Kopplungsstelle ein Ankopplungsglied (49) umfaßt, welches einerseits mit dem Schlitten (19) in Verbindung steht und andererseits an dem Schwinghebelarm (50) schwenkbar gelagert ist und durch Federn (51, 52) in eine Sollposition vorgespannt ist.

19. Brühkopf nach Anspruch 6 und wenigstens einem der Ansprüche 1 bis 5, 7 bis 18,
**dadurch gekennzeichnet,**
**daß** der Spindelzylinder (5, 5a) mit einer Geschwindigkeitsmeßeinrichtung ausgerüstet ist, mit der ein Geschwindigkeitsabfall erfaßbar ist, um den Hubkolbenantrieb zu stoppen.

20. Brühkopf nach Anspruch 6 und wenigstens einem der Ansprüche 1 bis 5, 7 bis 19,
**dadurch gekennzeichnet,**
**daß** der kolbenförmige Abschnitt (21, 21 a) des Schlittens (19, 19a) ein Crema-Ventil (60) aufweist.

21. Brühkopf nach Anspruch 20,
**dadurch gekennzeichnet,**
**daß** der Hubkolben (4a) in der Brühkammerhülse durch Federbelastung zu dem kolbenförmigen Abschnitt (21 a) des Schlittens (19a) hin vorgespannt ist.

22. Brühkopf nach Anspruch 21,
**dadurch gekennzeichnet,**
**daß** die Federbelastung des Hubkolbens (4a) durch eine Druckfeder (78) erfolgt, die in dem hohlen Spindelzylinder (5a) angeordnet ist und gegen eine Hubkolbenstange (4b) drückt, die in dem Spindelzylinder (5a) verschiebbar ist.

23. Brühkopf nach wenigstens einem der vorangehenden Ansprüche,
**dadurch gekennzeichnet,**
**daß** eine direkt in die Brühkammer einmahlende Kaffeemühle (18) oberhalb der Öffnung der Brühkammer, insbesondere oberhalb der Schiebekulisse (20) angeordnet ist.

## Claims

1. Brewing head for an espresso machine comprising a pressure-tightly lockable brewing chamber having an inlet for hot water, an opening for filling freshly ground coffee, an outlet for freshly brewed espresso and a force-controlled lifting piston (4, 4a), disposed in said brewing chamber within the circumferential wall thereof, by means of which piston a leached-out coffee meal cake (69) is lifted, after a brewing process, up to an upper edge of said circumferential wall from which said coffee meal cake (69) is laterally moved off by a slider, said slider (36) being associated to a carriage (19) which can be moved along a gliding face (41) over an opening of said brewing chamber and which includes a seal by which said opening of said brewing chamber can be sealed in an operating position of said carriage (19)
**characterized by**
a brewing chamber cartridge (3) forming said circumferential wall of said brewing chamber and movable substantially perpendicularly relative to the plane of said gliding face (41), which can be moved force-controlled in the operative position (Figs. 2, 9) of said carriage (19) through the plane of said gliding face into a sealing position at which said brewing chamber is sealed by said seal and can be moved back after a brewing process from the plane of said gliding face (41) into a rest position so that said carriage (19) is movable into an initial position (Figs. 1, 3, 4, 7) beside said brewing chamber.

2. Brewing head according to claim 1,
**characterized in**
**that** said seal is formed as a ring seal (22) and is provided on a substantially piston-shaped section (21) on the bottom face of said carriage (19).

3. Brewing head according to claim 2,
**characterized in**
**that** an upper section of said brewing chamber cartridge (3) can be moved above said ring seal (22) enclosing it in the sealing position.

4. Brewing head according to at least one of claims 1 to 3,
**characterized in**
**that** said lifting piston (4, 4a) which is connected with a lifting piston drive is movable within said brewing chamber cartridge (3),
**that** said brewing chamber cartridge (3) is loaded by a spring which tends to move said brewing chamber cartridge (3) into said sealing position,
**that** said brewing chamber cartridge (3) includes an entrainer ring (11) which under the load of the spring can contact said lifting piston (4, 4a) in order to move said brewing chamber cartridge (3) together with said lifting piston (4, 4a) over a partial lift, and
**that** said brewing chamber cartridge (3) can releasably be arrested in the rest position thereof by a locking nose (16).

5. Brewing head according to claim 4,
**characterized in**
**that** the spring load of said brewing chamber cartridge (3) is obtained by at least one compression spring (12, 13) indirectly or directly engaging at said brewing chamber cartridge (3).

6. Brewing head according to at least one of claims 4 and 5,
**characterized in**
**that** a spindle cylinder (5, 5a) is associated to said lifting piston (4, 4a) and that said spindle cylinder extends through said entrainer ring (11) and is in geared connection with an electromotive lifting piston drive.

7. Brewing head according to at least one of claims 4 to 6,
**characterized in**
**that** said locking nose (16) by which said brewing chamber cartridge can releasably be arrested in the rest position thereof is in operative connection with an electromotive carriage drive.

8. Brewing head according to claim 7,
**characterized in**
**that** said electromotive carriage drive comprises a drive motor (26) including gear (27) and that one output (30) of said gear (27) is connected with a locking disc (17) at which said locking nose (16) engages along a partial rotation range of said locking disc (17).

9. Brewing head according to at least one of claims 1 to 7,
**characterized in**
**that** said brewing chamber cartridge (3) is movably guided within a stationary guiding cartridge (2).

10. Brewing head according to at least one of claims 1 to 9,
**characterized in**
**that** the plane of said gliding face (41) of said carriage (19) is substantially horizontal and that said brewing chamber cartridge (3) can be lifted and lowered substantially in vertical direction.

11. Brewing head according to at least one of claims 1 to 10,
**characterized in**
**that** said carriage (19) can be moved between two end positions only, i.e. the operating position (Figs. 2, 9) and an initial position (Figs. 1, 3, 4, 7).

12. Brewing head according to at least one of claims 1 to 11,
**characterized in**
**that** said slider (36) comprises a front push-out wall (37) and is carried on said carriage (19) to be set in a pushing-out position and in a return position in a manner that one bottom face (40) of said front push-out wall in the pushing-out position of said slider (36) is lowered down to said gliding face (41) of said carriage (19) and in the return position of said slider (36) is lifted in spaced relation above said gliding face (41).

13. Brewing head according to claim 12,
**characterized in**
**that** said carriage (19) is movable within a moving coulisse (20) between a front stop (44, 45) at the operative position of said carriage (19) and a rear stop (47) at the initial position thereof, and
**that** said slider (36) can be set by butting against said front stop (44, 45) into its return position and can be set by butting against the rear stop (47) into its pushing-out position.

14. Brewing head according to claims 12 and 13,
**characterized in**
**that** said slider (36) is carried shiftably on said carriage (19) in the moving direction of said carriage (19), that said slider (36) comprises a supporting bottom (39) by which it can abut on said carriage (19),
**that** said front push-out wall (37) in front of said carriage (19) and a rear push-out wall (38) behind said carriage (19) are bent downward from front-side ends of said supporting bottom (39),
**that** on said supporting bottom (39), oblique entrainer noses (42, 42') are formed which in the pushing-out position of said slider (36) are disposed in receiver grooves (43, 43') of the upper side of said carriage (19), slide out of said receiver grooves (43, 43') on the upper side of said carriage into the return position when moving said slider (36) relative to said carriage (19) when said carriage (36) butts against said front stop (44, 45), and slide from the upper side of said carriage into said receiver grooves (43, 43') into the pushing-out position when moving said slider (36) butting against the rear stop (47) relative to carriage (19).

15. Brewing head according to claim 14,
**characterized in**
**that** said front push-out wall (37) and said rear push-out wall (38) each butt in on of the end positions of said carriage against front stop (44, 45) or rear stop (47), respectively.

16. Brewing head according to at least one of claims 14 and 15,
**characterized in**
**that** said slider (36) is pressed onto said carriage by a slider spring (48).

17. Brewing head according to at least one of claims 1 to 15,
**characterized in**
**that** said electromotive carriage drive comprises, in addition to said drive motor (26) and said gear (27), a swinging lever (23) which is in operative connection with one output (29) of said gear (27) and is coupled to said carriage (19) and
**that** said swinging lever (23) is designed resiliently elastically close to a carriage coupling location.

18. Brewing head according to claim 17,
**characterized in**
**that** said swinging lever (23) comprises a driven swinging lever arm (50) and, close to the carriage coupling location, a coupling member (49) which on one portion is in connection with said carriage (19) and on another portion is pivotally supported on said swinging lever arm (50) and is biased by springs (51, 52) to a nominal position.

19. Brewing head according to claim 6 and to at least one of claims 1 to 5, 7 to 18,
**characterized in**
**that** said spindle cylinder (5, 5a) is equipped with a speed measuring device by which a speed drop can be detected to stop the lifting piston drive.

20. Brewing head according to claim 6 and at least one of claims 1 to 5, 7 to 19,
**characterized in**
**that** said piston-shaped section (21, 21a) of said carriage 19, 19a) includes a crema valve (60).

21. Brewing head according to claim 20,
**characterized in**
**that** said lifting piston (4a) in said brewing chamber cartridge is biased by spring load towards said piston-shaped section (21a) of said carriage (19a).

22. Brewing head according to claim 21,
**characterized in**
**that** the spring load of said lifting piston (4a) is provided by a compression spring (78) which is disposed in said hollow spindle cylinder (5a) and presses against a lifting piston rod (4b) which is movable within said spindle cylinder (5a).

23. Brewing head according to at least one of the foregoing claims,
**characterized in**
**that** a coffee grinder (18) directly grinding into said brewing chamber is disposed above the opening of said brewing chamber, particularly above said moving coulisse (20).

## Revendications

1. Tête d'ébouillantage d'une machine à café express comprenant une chambre d'ébouillantage pouvant être fermée hermétiquement et présentant une entrée pour de l'eau chaude, une ouverture de remplissage pour de la mouture de café fraîche, une sortie pour le café express fraîchement produit par ébouillantage et un piston élévateur (4, 4a) à commande forcée, qui est disposé dans la chambre d'ébouillantage, à l'intérieur de sa paroi périphérique, et à l'aide duquel, après une phase d'ébouillantage, une galette de mouture de café (69), résultant de la lixiviation, est soulevée jusqu'à un bord supérieur de la paroi périphérique, d'où la galette de mouture de café (69) est repoussée vers le côté à l'aide d'un organe d'expulsion, l'organe d'expulsion (36) étant adjoint à un chariot (19) qui est déplaçable sur une surface de glissement (41), jusqu'au-dessus d'une ouverture de la chambre d'ébouillantage, et qui présente une garniture d'étanchéité, à l'aide de laquelle l'ouverture de la chambre d'ébouillantage peut être obturée de façon étanche, dans une position de travail du chariot (19),
**caractérisée par**
un manchon de chambre d'ébouillantage (3) formant la paroi périphérique de la chambre d'ébouillantage, qui est déplaçable dans une direction sensiblement perpendiculaire au plan de la surface de glissement (41) et qui, dans la position de travail (Fig. 2, 9) du chariot (19), peut être déplacé, sous commande forcée, à travers le plan de la surface de glissement (41), jusque dans une position d'étanchéification, dans laquelle la chambre d'ébouillantage est rendue étanche au moyen de la garniture d'étanchéité et, après une phase d'ébouillantage, peut être ramené dans une position de repos, hors du plan de la surface de glissement (41), de sorte que le chariot (19) peut être translaté dans une position initiale (Fig. 1, 3, 4, 7) à côté de la chambre d'ébouillantage.

2. Tête d'ébouillantage selon la revendication 1,
**caractérisée**
**en ce que** la garniture d'étanchéité est réalisée sous forme d'une garniture d'étanchéité annulaire (22) et est appliquée sur la face inférieure du chariot (19), sur une partie (21) sensiblement en forme de piston.

3. Tête d'ébouillantage selon la revendication 2,
**caractérisée**
**en ce qu'**un tronçon supérieur du manchon de chambre d'ébouillantage (3) est déplaçable par dessus la garniture d'étanchéité annulaire (22) et l'enserre dans la position d'étanchéification.

4. Tête d'ébouillantage selon l'une au moins des revendications 1 à 3,
**caractérisée**
**en ce que** le piston élévateur (4, 4a), qui se trouve relié à un
actionneur de piston élévateur, est déplaçable par coulissement dans le manchon de chambre d'ébouillantage (3),
**en ce que** le manchon de chambre d'ébouillantage (3) est placé sous la sollicitation d'un ressort, qui tend à déplacer le manchon de chambre d'ébouillantage (3) dans la position d'étanchéification,
**en ce que** le manchon de chambre d'ébouillantage (3) présente un anneau de co-entraînement (11), qui peut venir en appui contre le piston élévateur (4, 4a) sous la sollicitation du ressort, afin de déplacer le manchon de chambre d'ébouillantage (3) conjointement avec le piston élévateur (4, 4a) sur une course partielle, et
**en ce que** le manchon de chambre d'ébouillantage (3) peut être bloqué, d'une façon libérable, dans sa position de repos, au moyen d'un bec d'arrêt (16).

5. Tête d'ébouillantage selon la revendication 4,
**caractérisée**
**en ce que** la sollicitation par ressort du manchon de chambre d'ébouillantage (3) est produite par au moins un ressort de pression (12, 13), qui agit indirectement ou directement sur le manchon de chambre d'ébouillantage (3).

6. Tête d'ébouillantage selon l'une au moins des revendications 4 et 5,
**caractérisée**
**en ce qu'**au piston élévateur (4, 4a) est adjoint un vérin à vis (5, 5a), qui passe à travers l'anneau de co-entzaînement (11) et est placé en liaison par engrenage avec un actionneur à motorisation électrique du piston élévateur.

7. Tête d'ébouillantage selon l'une au moins des revendications 4 à 6,
**caractérisée**
**en ce que** le bec d'arrêt (16), à l'aide duquel le manchon de chambre d'ébouillantage peut être bloqué dans sa position de repos de façon libérable, est placé en liaison active de coopération avec un actionneur à motorisation électrique du chariot.

8. Tête d'ébouillantage selon la revendication 7,
**caractérisée**
**en ce que** l'actionneur à motorisation électrique du chariot comprend un moteur d'entraînement (26) à mécanisme de transmission (27) et en ce qu'un élément de sortie (30) du mécanisme de transmission (27) est relié à un disque d'arrêt (17), contre lequel le bec d'arrêt (16) est appliqué sur une plage de rotation partielle du disque d'arrêt (17).

9. Tête d'ébouillantage selon l'une au moins des revendications 1 à 7,
**caractérisée**
**en ce que** le manchon de chambre d'ébouillantage (3) est guidé en coulissement linéaire dans un manchon de guidage (2) fixe.

10. Tête d'ébouillantage selon l'une au moins des revendications 1 à 9,
**caractérisée**
**en ce que** le plan de la surface de glissement (41) du chariot (19) est sensiblement horizontal et en ce que le manchon de chambre d'ébouillantage (3) peut être élevé et abaissé dans une direction sensiblement verticale.

11. Tête d'ébouillantage selon l'une au moins des revendications 1 à 10,
**caractérisée**
**en ce que** le chariot (19) est déplaçable en translation uniquement entre deux positions extrêmes, à savoir la position de travail (Fig. 2, 9) et une position initiale (Fig. 1, 3, 4, 7).

12. Tête d'ébouillantage selon l'une au moins des revendications 1 à 11,
**caractérisée**
**en ce que** l'organe d'expulsion (36) comprend une paroi avant (37) et est monté réglable dans une position de déblaiement ainsi que dans une position de retour, sur le chariot (19), ceci d'une manière telle, qu'un côté inférieur (40) de la paroi avant de l'organe d'expulsion soit, dans la position de déblaiement de l'organe d'expulsion (36), abaissé sur la surface de glissement (41) du chariot (19) et, dans la position de retour de l'organe d'expulsion (36), relevé à une certaine distance au-dessus de la surface de glissement (41).

13. Tête d'ébouillantage selon la revendication 12,
**caractérisée**
**en ce que** le chariot (19) est déplaçable en translation dans une glissière de coulissement (20), entre une limite avant (44, 45), à hauteur de la position de travail du chariot (19), et une limite arrière (47), pour la position initiale de ce dernier, et
**en ce que** l'organe d'expulsion (36) est ajustable dans sa position de retour en entrant en contact avec la limite avant (44, 45) et est ajustable dans sa position de déblaiement en entrant en contact avec la limite arrière (47).

14. Tête d'ébouillantage selon les revendications 12 et 13,
**caractérisée**
**en ce que** l'organe d'expulsion (36) est monté à coulissement sur le chariot (19), dans la direction de translation de ce dernier, en ce que l'organe d'expulsion (36) comprend un fond d'appui (39) avec lequel il peut venir en appui sur le chariot (19),
**en ce que** depuis des extrémités frontales du fond d'appui (39), la paroi avant (37) de l'organe d'expulsion est formée en coude vers le bas, en avant du chariot (19), et une paroi arrière (38) de l'organe d'expulsion est formée en coude vers le bas, en arrière du chariot (19),
**en ce que** sur le fond d'appui (39), sont formés des ergots de co-entraînement inclinés (42, 42') qui, dans la position de déblaiement de l'organe d'expulsion (36), sont calés dans des rainures de réception (43, 43') de la face supérieure du chariot (19) et qui, lors du coulissement de l'organe d'expulsion (36) par rapport au chariot (19) par l'entrée en contact de l'organe d'expulsion (36) avec la limite avant (44, 45), glissent hors des rainures de réception (43, 43') jusque sur la face supérieure du chariot (19), dans la position de retour, et lors du coulissement, par rapport au chariot (19), de l'organe d'expulsion (36) entrant en contact avec la limite arrière (47), glissent de la face supérieure du chariot dans les rainures de réception (43, 43'), dans la position de déblaiement.

15. Tête d'ébouillantage selon la revendication 14,
**caractérisée**
**en ce que** la paroi avant (37) de l'organe d'expulsion et la paroi arrière (38) de l'organe d'expulsion entrent en contact, chacune dans une position extrême respective du chariot, avec la limite avant (44, 45), respectivement la limite arrière (47).

16. Tête d'ébouillantage selon l'une au moins des revendications 14 et 15,
**caractérisée**
**en ce que** l'organe d'expulsion (36) est repoussé vers le chariot (19) par un ressort (48) d'organe d'expulsion.

17. Tête d'ébouillantage selon l'une au moins des revendications 1 à 15,
**caractérisée**
**en ce que** l'actionneur à motorisation électrique du chariot, outre le moteur d'entraînement (26) avec le mécanisme de transmission (27), comprend un levier oscillant (23), qui est en liaison d'entraînement avec un élément de sortie (29) du mécanisme de transmission (27) et est accouplé au chariot (19), et
**en ce que** le levier oscillant (23) est, à proximité d'un point d'accouplement au chariot, doté d'une structure flexible ayant l'élasticité d'un ressort.

18. Tête d'ébouillantage selon la revendication 17,
**caractérisée**
**en ce que** le levier oscillant (23) comprend un bras de levier oscillant (50) entraîné et, à proximité du point d'accouplement au chariot, un élément d'accouplement (49) qui, d'un côté, est relié au chariot (19) et, de l'autre côté, est monté à pivotement sur le bras de levier oscillant (50) et est précontraint dans une position prescrite, par des ressorts (51, 52).

19. Tête d'ébouillantage selon la revendication 6 et l'une au moins des revendications 1 à 5, 7 à 18,
**caractérisée**
**en ce que** le vérin à vis (5, 5a) est équipé d'un dispositif de mesure de vitesse, à l'aide duquel une chute de vitesse peut être détectée pour arrêter l'actionneur du piston élévateur.

20. Tête d'ébouillantage selon la revendication 6 et l'une au moins des revendications 1 à 5, 7 à 19,
**caractérisée**
**en ce que** la partie en forme de piston (21, 21a) du chariot (19, 19a) présente une valve distributrice de crème (60).

21. Tête d'ébouillantage selon la revendication 20,
**caractérisée**
**en ce que** le piston élévateur (4a) est, dans le manchon de chambre d'ébouillantage, précontraint en direction de la partie en forme de piston (21a) du chariot (19a) par la sollicitation d'un ressort.

22. Tête d'ébouillantage selon la revendication 21,
**caractérisée**
**en ce que** la sollicitation par ressort du piston élévateur (4a) est produite par un ressort de pression (78), qui est disposé dans le vérin à vis(5a) creux et exerce une poussée contre une tige (4b) du piston élévateur, laquelle est coulissante dans le vérin à vis (5a).

23. Tête d'ébouillantage selon l'une au moins des revendications précédentes,
**caractérisée**
**en ce qu'**un moulin à café (18) moulant directement dans la chambre d'ébouillantage, est disposé au-dessus de l'ouverture de la chambre d'ébouillantage, en particulier au-dessus de la glissière de coulissement (20).
